(19) Europäisches Patentamt
European Patent Office
Office européen des brevets

(11) Veröffentlichungsnummer: **0 029 960**
**A1**

# (12) EUROPÄISCHE PATENTANMELDUNG

(21) Anmeldenummer: **80107192.9**

(22) Anmeldetag: **19.11.80**

(51) Int. Cl.³: **C 09 B 67/26**
C 09 B 67/54

(30) Priorität: **30.11.79 DE 2948292**

(43) Veröffentlichungstag der Anmeldung:
**10.06.81 Patentblatt 81/23**

(84) Benannte Vertragsstaaten:
**CH DE FR GB IT LI**

(71) Anmelder: **BAYER AG**
**Zentralbereich Patente, Marken und Lizenzen**
**D-5090 Leverkusen 1, Bayerwerk(DE)**

(72) Erfinder: **Koll, Jochen, Ing.-Grad.**
**Am Telegraf 40**
**D-5068 Odenthal 3(DE)**

(72) Erfinder: **Mölls, Hans-Heinz, Dr.**
**Max-Beckmann-Strasse 29**
**D-5090 Leverkusen(DE)**

(72) Erfinder: **Bleck, Wolf-Eckhard, Dr.**
**Auf dem Broich 28**
**D-5068 Odenthal-Glöbusch(DE)**

(72) Erfinder: **Hörnle, Reinhold, Dr.**
**Hufelandstrasse 42**
**D-5000 Köln 80(DE)**

(72) Erfinder: **Hildebrand, Dietrich, Dr.**
**Wingensiefer Kamp 13**
**D-5068 Odenthal(DE)**

(72) Erfinder: **Nonn, Konrad, Dr.**
**Otto Stange Strasse 17**
**D-5090 Leverkusen(DE)**

(54) **Wässrige, lösungsmittelfreie konzentrierte Präparationen von Reaktivfarbstoffen und Verfahren zu ihrer Herstellung.**

(57) Konzentrierte wäßrige Lösungen von Reaktivfarbstoffen mit Alkylsulfonylpyrimidinyl-Dichlorchinoxalinyl-, Monofluortriazinyl- oder Fluorpyrimidinyl-Reaktiv-gruppen, die sich durch hohe Lagerstabilität und Hydrolysenbeständigkeit auszeichnen, erhält man durch direktes Aufkonzentrieren der Reaktionslösungen des letzten Syntheseschrittes mittels eines Membrantrennverfahrens, vorzugsweise durch Druckpermeation.

EP 0 029 960 A1

0029960

BAYER AKTIENGESELLSCHAFT 5090 Leverkusen, Bayerwerk

Zentralbereich
Patente, Marken und Lizenzen My-by-c

Wäßrige, lösungsmittelfreie konzentrierte Präparationen von Reaktivfarbstoffen und Verfahren zu ihrer Herstellung

Gegenstand der vorliegenden Erfindung sind wäßrige, lösungsmittelfreie konzentrierte Präparationen von Reaktivfarbstoffen mit Alkylsulfonylpyrimidinyl-, Dichlorchinoxalinyl-, Monofluortriazinyl- oder Fluorpyrimidinyl-Reaktivgruppen, hergestellt durch direktes Aufkonzentrieren der Reaktionslösungen des letzten Syntheseschrittes mittels eines Membrantrennverfahrens.

Letzter Syntheseschritt ist vorzugsweise die Einführung der Reaktivgruppe durch Acylierung einer Aminogruppe.

Bevorzugte Farbstoffe sind solche mit mindestens einer wasserlöslichmachenden Gruppe, insbesondere einer Sulfogruppe.

Die Farbstoffe selbst und Verfahren zu ihrer Herstellung sind bekannt.

Als zur Anwendung kommendes Membrantrennverfahren kommt die beispielsweise bei U.F. Franck Dechema-Monographie 75, 1452-1485 9/37 (1974) beschriebene Reversosmose, Ultrafiltration, Dialyse oder Elektrodialyse in Betracht.

Vorzugsweise wird die Druckpermeation, also Reversosmose und Ultrafiltration angewandt, bei der die Salzmenge mit der Konzentrierung des Farbstoffs vermindert wird und die Gefahr einer thermischen Schädigung ausgeschlossen ist.

Bei diesem Verfahren wird die verdünnte Lösung unter Druck über eine semipermeable Membran geleitet. Dabei permeieren Wasser, anorganische Salze sowie Reaktionsvor- und -nebenprodukte die Membran. Der Farbstoff wird von der Membran nahezu vollständig zurückgehalten. Membranen der vorgenannten Art können aus den verschiedensten Materialien hergestellt sein, wie z.B. Cellulosedi- oder -triacetat, Cellulose oder auch aus synthetischen Polymeren wie z.B. Polyamiden, Polyolefinen, Polysulfonen u.a. mehr. Des weiteren aber auch solche aus porösem Glas oder Schwermetalloxiden. Letztgenannte sind unter dem Begriff dynamische Membranen bekannt.

Es werden dabei Membranen eingesetzt, die den Farbstoff überwiegend, vorzugsweise zu über 95 % zurückhalten.

Die Druckpermeation kann in allen Geräten durchgeführt werden, die Membranen enthalten, die den genannten Anforderungen entsprechen. Die Form der Membran bzw. des Moduls ist beliebig. Üblicherweise können folgende Membran- bzw. Modulformen eingesetzt

werden: Hohlfasern, Hohlfeinfasern, Tubularmembranen, Wickelmodule, Platten-Rahmen-Module u.v.a.m.

Die anzuwendenden Drücke richten sich nach den Erfordernissen des jeweiligen Moduls und der jeweiligen Membran. Vorzugsweise liegen die Drücke zwischen 5 und 60 bar.

Der pH-Wert und die Temperatur sind bezüglich der Membran bzw. des Moduls nicht kritisch, da für alle pH- und Temperaturbereiche geeignete Membranen und Module zur Verfügung stehen.

Die erfindungsgemäßen Präparationen sind im allgemeinen Lösungen. Der Farbstoffgehalt liegt bei etwa 20-50 Gew.-%.

Die Präparationen können neben den Farbstoffen noch die synthesebedingt anfallenden Salze, insbesondere Alkalihalogenide oder Alkalisulfate wie NaCl und $Na_2SO_4$ enthalten.

Weiterhin können übliche Zusatzstoffe vorhanden sein, beispielsweise Puffersubstanzen, insbesondere solche, die einen pH-Wert von 6-7 einstellen. Die Puffersubstanzen können dabei vor oder nach der Aufkonzentrierung zugesetzt werden.

Der Salzgehalt der Präparationen soll vorzugsweise bei etwa 0,5 bis 10 Gew.-% liegen.

Die Präparationen können insbesondere auch Harnstoff enthalten, vorzugsweise in Mengen von etwa 10 bis 40 Gew.-%, bezogen auf das Gesamtgewicht der Lösung.

Die Farbstoffe liegen im allgemeinen in Form der Li-, Na-, K- oder substituierten Ammoniumsalze vor.

Die erfindungsgemäßen Lösungen zeichnen sich durch eine hohe Lagerstabilität und Hydrolysebeständigkeit zwischen 0-40°C und durch bequeme Anwendung aus. In einer Reihe von Fällen liegen die Farbstoffe in diesen konzentrierten Lösungen in Form von Flüssig-Kristallen vor. Sie eignen sich zur Herstellung von Färbebädern und Druckpasten für das Färben und Bedrucken von natürlichen und synthetischen Fasermaterialien insbesondere Baumwolle und Wolle, sowie Papier und Leder.

Beispiel 1

Von 10 l der wäßrigen Reaktionslösung, die 750 g des nach Beispiel 10 der Deutschen Auslegeschrift 1 191 059 hergestellten Farbstoffes der Formel

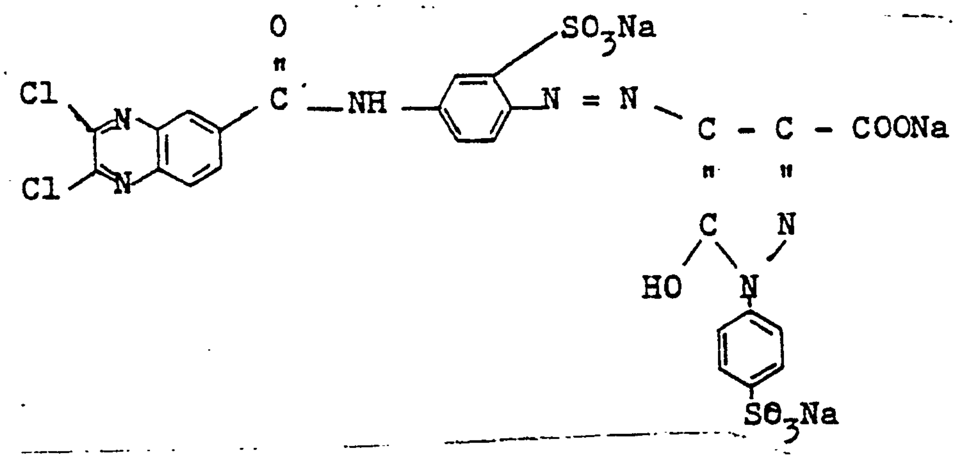

enthält, werden bei Raumtemperatur und 40 bar auf einem Druckpermeationslaborgerät mit 0,36 $m^2$ einer Membran eines aromatischen Polyamidderivats mit Trenngrenze ca. MG 500 während 70 min 7 l farbstofffreies, salzhaltiges Permeat abgezogen. Man erhält eine hochkonzentrierte, lagerstabile und hydrolysebeständige Farbstoffpräparation, die direkt gebrauchsfertig ist. Der Farbstoff liegt dabei in Form von Flüssig-Kristallen vor. Dies gilt auch für die anderen Alkalisalze, wie $Li^+$ und $K^+$ und für die Salze mit tertiären Aminen, insbesondere Triäthanolamin und Methyldiäthanolamin. Beim Einrühren des Präparates in Wasser und nach Zugabe von Verdickungsmitteln sowie der in der Färberei üblichen Hilfsmittel erhält man eine Druckpaste zum Bedrucken von natürlichen und regenerierten Cellulosefasern in rotstichig gelben Tönen.

Beispiel 2

Von 10 l der wäßrigen Reaktionslösung, die 1215 g des nach Beispiel 15 der Deutschen Auslegeschrift 1 191 059 hergestellten Farbstoffes der Formel

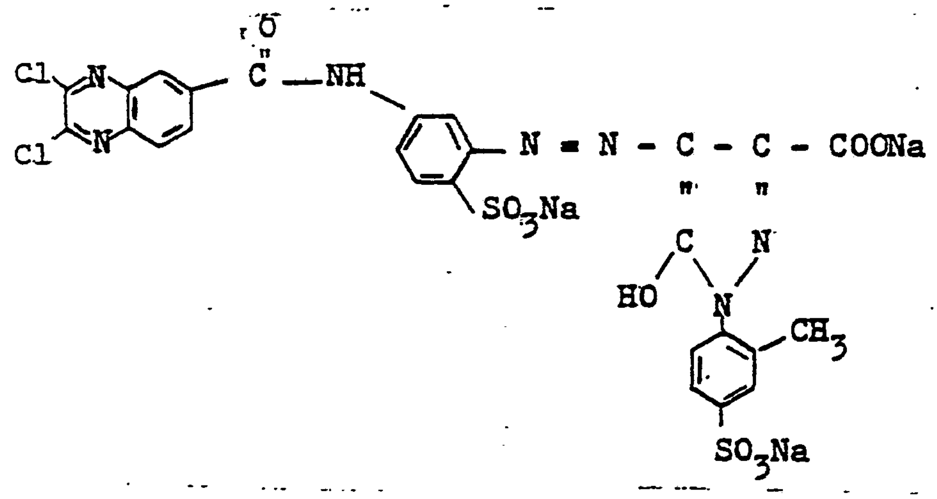

enthält, werden bei Raumtemperatur und 40 bar auf einem Druckpermeationslaborgerät mit 0,36 $m^2$ der Membran aus Beispiel 1 während 50 min 5 l farbstofffreies, salzhaltiges Permeat abgezogen. Man erhält eine hochkonzentrierte, lagerstabile und hydrolysebeständige Farbstoffpräparation, die direkt gebrauchsfertig ist. Der Farbstoff liegt dabei z.T. in Form von Flüssig-Kristallen vor. Die gilt auch für die anderen Alkalisalze wie $Li^+$ und $K^+$ und für die Salze mit tertiären Aminen insbesondere Triäthanolamin und Methyldiäthanolamin. Sie kann z.B. direkt dem Färbebad zum Färben von Cellulosefasern nach dem Ausziehverfahren zugesetzt werden. Man erhält eine brillante gelbe Färbung.

Beispiel 3

8.800 g der wäßrigen Lösung mit 1.450 g des Farbstoffes

wie er in der Deutschen Offenlegungsschrift 2 749 597 auf Seite 26 oben beschrieben ist, werden bei Raumtemperatur und 40 bar auf einem Druckpermeationslaborgerät mit 0,36 $m^2$ der Membran aus Beispiel 1 innerhalb von 35 min auf ein Gewicht von 4.500 g aufkonzentriert. Mit einem Phosphatpuffer wird ein pH-Wert von 6 eingestellt.

Man erhält eine hochkonzentrierte, lagerstabile und hydrolysebeständige Farbstofflösung, die direkt gebrauchsfertig ist. Nach bekannten Verfahren erhält man mit dieser Lösung auf Baumwolle und Zellwolle braune Reaktivdrucke mit guten Echtheiten.

Beispiel 4

Von 10 l einer wäßrigen Reaktionslösung, die 500 g des nach Beispiel 3 der Deutschen Offenlegungsschrift 2 232 541 hergestellten Farbstoffes der Formel

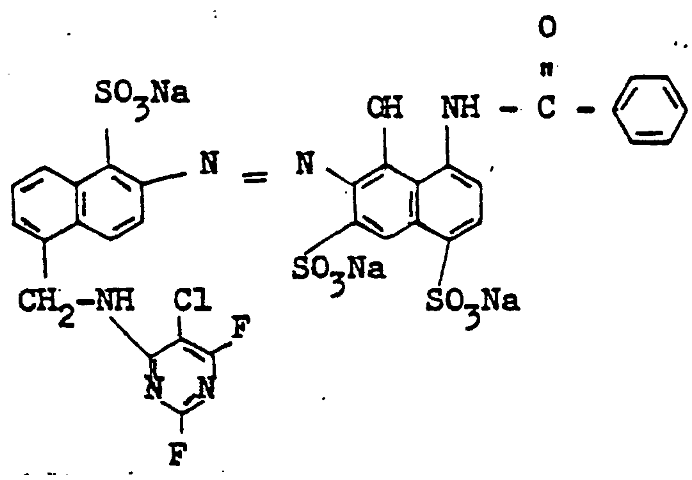

enthält, werden bei Raumtemperatur und 40 bar auf einem Druckpermeationslaborgerät mit 0,36 $m^2$ einer Celluloseacetat-Membran mit molekularer Trenngrenze MG 500 während 3,3 h 7,5 l geringfügig angefärbtes, salzhaltiges Permeat abgezogen.

Man erhält eine hochkonzentrierte, lagerstabile und hydrolysebeständige Farbstofflösung, die direkt gebrauchsfertig ist. Nach Einrühren des Präparates in Wasser kann nach der in der Deutschen Offenlegungsschrift 2 232 541 im Beispiel 3 angegebenen Klotzvorschrift weitergearbeitet werden. Man erhält eine klare blaustichig rote Färbung auf Baumwolle.

Beispiel 5

10 l einer wäßrigen Reaktionslösung die 360 g des nach Beispiel 2 der Deutschen Offenlegungsschrift 2 847 173 hergestellten Farbstoffs der Formel

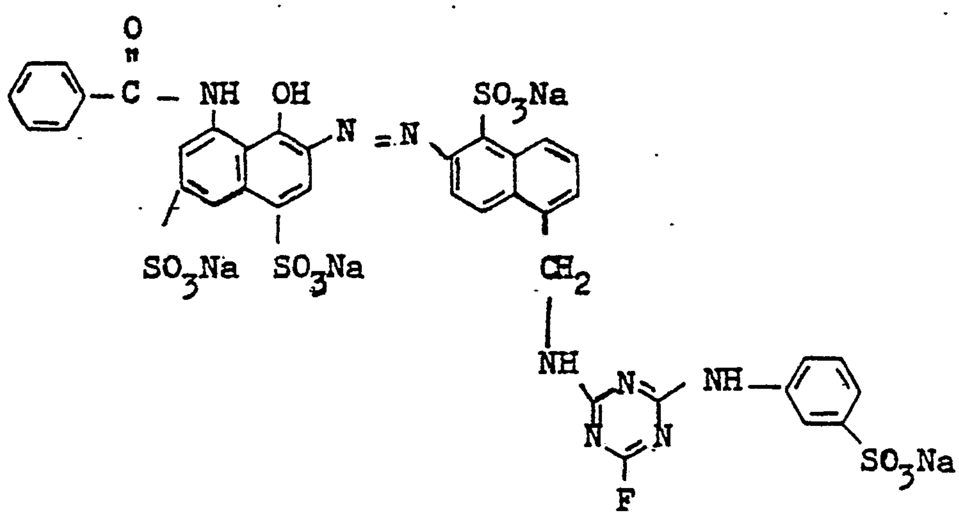

enthält,

werden bei Raumtemperatur und 40 bar auf einem Druckpermeationslaborgerät und 0,36 $m^2$ einer Polysulfon-Membran, die den Farbstoff zu mehr als 98 % zurückhält, aufkonzentriert. Innerhalb von 2,7 h werden 8 l geringfügig angefärbtes, salzhaltiges Permeat abgezogen.

Man erhält eine hochkonzentrierte, lagerstabile und hydrolysebeständige Farbstofflösung, die direkt gebrauchsfertig ist. Rührt man das Präparat in Wasser an und verfährt nach der in der Deutschen Offenlegungsschrift 2 847 173 angegebenen Färbevorschrift II, so erhält man auf Baumwollgeweben eine rote Färbung.

Beispiel 6

10 l einer wäßrigen Reaktionslösung, die 600 g des nach Beispiel 206 der Deutschen Offenlegungsschrift 1 544 517 hergestellten Farbstoffes der Formel

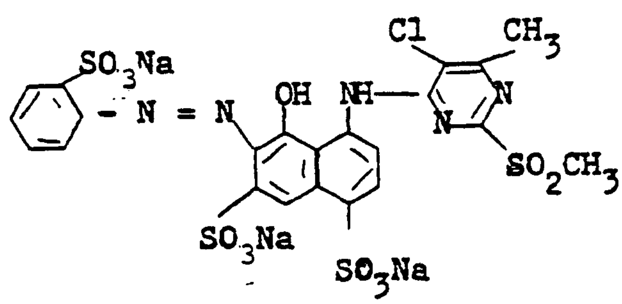

enthält, werden bei Raumtemperatur und 40 bar auf einem Druckpermeationslaborgerät mit 0,36 $m^2$ der Membran aus Beispiel 1 aufkonzentriert. Innerhalb von 45 min werden

7,6 l geringfügig angefärbtes, salzhaltiges Permeat abgezogen.

Nach Zugabe von 400 g Harnstoff erhält man eine hochkonzentrierte, lagerstabile und hydrolysebeständige Farbstofflösung, die wie im Beispiel 1 angegeben, direkt zur Herstellung einer Druckpaste gebrauchsfertig ist. Auf Cellulosematerialien erhält man damit einen kräftigen roten Druck.

Ähnlich gute Ergebnisse erhält man, wenn anstelle des Farbstoff Na-Salzes die Li- oder K-Salze eingesetzt werden.

Beispiel 7

529,3 Teile des Natriumsalzes der 1-Amino-8-hydroxy-4,6-disulfonsäure in 4.000 Teilen Wasser gelöst, werden bei pH = ca. 6 unter gutem Rühren bei ca. 30-40°C mit 238,5 Teilen 2,4-Difluor-5-chlor-6-methylpyrimidin versetzt. Bei pH = ca. 6 wird solange gerührt, bis keine freie Aminogruppe mehr nachweisbar ist. In diese Lösung werden bei Raumtemperatur 17,5 Teile diazotierte 2-Aminobenzolsulfonsäure zugesetzt, wobei der pH-Wert mit 12 Teilen Soda bei 7-7,5 gehalten wird. Der entstandene Farbstoff besitzt die Formel

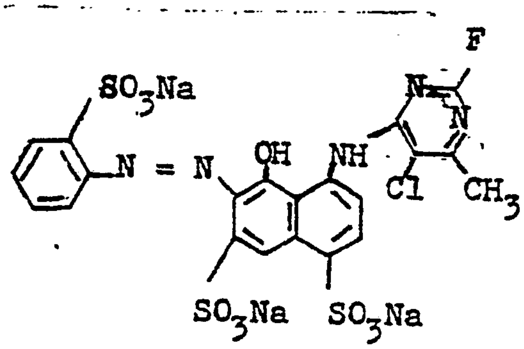

10 l der wäßrigen Reaktionslösung, die 930 g des obigen Farbstoffs enthält, werden bei Raumtemperaturen und 40 bar auf einem Druckpermeationsgerät mit 0,36 $m^2$ der Membran aus Beispiel 1 während 1,5 h auf 4,3 l aufkonzentriert. Man erhält eine hochkonzentrierte lagerstabile und hydrolysebeständige Farbstofflösung, die direkt gebrauchsfertig ist. Beim Einrühren des Präparates in Wasser und nach Zugabe von Verdickungsmittel sowie der in der Färberei üblichen Hilfsmittel erhält man eine Druckpaste mit der man auf Cellulosegewebe einen kräftigen roten Druck erhält.

Patentansprüche

1. Wäßrige, lösungsmittelfreie konzentrierte Präparationen von Reaktivfarbstoffen mit Alkylsulfonylpyrimidinyl-Dichlorchinoxalinyl-, Monofluortriazinyl- oder Fluorpyrimidinyl-Reaktivgruppen, hergestellt durch direktes Aufkonzentrieren der Reaktionslösungen des letzten Syntheseschrittes mittels eines Membrantrennverfahrens.

2. Präparationen gemäß Anspruch 1, hergestellt durch Druckpermeation.

3. Präparationen gemäß Ansprüchen 1 und 2 die auf pH 6-7 gepuffert sind.

4. Präparationen gemäß Ansprüchen 1-3, die Harnstoff enthalten.

Europäisches Patentamt

# EUROPÄISCHER RECHERCHENBERICHT

Nummer der Anmeldung
EP 80 10 7192

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| | FR - A - 2 124 359 (CIBA-GEIGY)<br>* Seite 2, Zeile 2 bis Seite 3, Zeile 13; Beispiele 22 bis 30 *<br>& DE - A - 2 204 725<br>-- | 1-3 | C 09 B 67/26<br>C 09 B 67/54 |
| A | FR - A - 2 267 352 (HOECHST)<br>& DE - A - 2 417 255<br>-- | | |
| A | FR - A - 2 416 926 (BAYER)<br>& DE - A - 2 805 891<br>-- | | RECHERCHIERTE SACHGEBIETE (Int Cl ³)<br>C 09 B 67/26<br>67/24<br>67/54<br>67/44 |
| A | FR - A - 2 207 169 (I.C.I.)<br>& DE - A - 2 358 080<br>-------- | | |

KATEGORIE DER GENANNTEN DOKUMENTE
- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 16-03-1981 | DAUKSCH |